# FASCICULE DE BREVET EUROPEEN

(11) **EP 3 898 172 B1**
(45) Date de publication et mention de la délivrance du brevet: **04.10.2023**
(21) Numéro de dépôt: 19848801.7
(22) Date de dépôt: 20.12.2019
(51) Int. Cl.: B29C 49/06, B29C 49/42, B29C 49/28, B29C 49/64, B65G 17/00, B65G 47/84

(54) **DISPOSITIF DE REMPLACEMENT DE NEZ DE TOURNETTE D'UN FOUR D'UNE INSTALLATION DE SOUFFLAGE DE PREFORMES ET PROCEDE CORRESPONDANT**
VORRICHTUNG ZUM AUSWECHSELN DER SPINDELNASE EINES OFENS EINER VORFORMBLASANLAGE UND ENTSPRECHENDES VERFAHREN
DEVICE FOR REPLACING THE SPINDLE NOSE OF A FURNACE OF A PREFORM BLOWING PLANT, AND CORRESPONDING METHOD

(30) Priorité: 21.12.2018 FR 1873908
(43) Date de publication de la demande: 27.10.2021
(73) Titulaire: Sidel Participations, 76930 Octeville-sur-Mer (FR)
(72) Inventeur: FEVRE, Sébastien, 76930 Octeville-Sur-Mer (FR); DIESNIS, Daniel, 76930 Octeville-Sur-Mer (FR); BONNAIRE, Emmanuel, 76930 Octeville-Sur-Mer (FR)
(74) Mandataire: Sidel Group
(86) Numéro de dépôt international: PCT/FR2019/053226
(87) Numéro de publication internationale: WO 2020/128378

(56) Documents cités:
- EP-A1- 2 258 534
- EP-A1- 2 976 207
- EP-B1- 2 258 534
- EP-B1- 2 976 207
- DE-A1-102007 037 400
- FR-A1- 3 063 985

## Description

La présente invention entre dans le domaine de la production et du traitement de produits au sein d'une ligne industrielle.

De tels produits peuvent être des récipients, de type bouteille ou flacon, en matériau plastique. De tels produits sont généralement destinés à contenir des fluides ou des liquides, notamment agroalimentaires.

De manière connue, la fabrication de récipients en matériau plastique peut s'effectuer au cours d'une opération de mise en forme par soufflage de « préformes », notamment obtenues à partir de paraisons. Ces préformes comprennent un corps cylindrique tubulaire de forme oblongue et fermé à une extrémité par un fond globalement arrondi et prolongé à l'extrémité opposée ouverte munie d'un col. Sous ce col, une collerette annulaire saillante sert de surface d'appui à un moyen de préhension, comme une pince, ou à des rails de guidage. Chaque préforme s'apparente globalement à un tube à essai, surmonté du goulot du futur récipient qu'elle constituera après une opération de soufflage.

L'opération de soufflage du corps de la préforme nécessite qu'il soit porté à une température supérieure à la température de transition vitreuse du matériau plastique constituant la préforme. Préalablement au soufflage, on procède à un conditionnement thermique de chaque préforme en la faisant circuler à l'intérieur d'un four. La circulation des préformes dans ce four s'opère par un convoyeur à chaîne, muni de moyens de préhension réparti régulièrement le long de ladite chaîne, en particulier un moyen de préhension est solidaire de chaque maillon de la chaîne du convoyeur. Plus avant, un moyen de préhension n'est pas une simple pince venant maintenir une préforme par enserrement, mais doit permettre d'entraîner une préforme en rotation, afin de répartir le gradient de température sur l'intégralité du corps de chaque préforme lors de son passage dans le four.

Un moyen de préhension répandu comprend un support de réception d'une préforme, ledit support étant monté en pivot glissant par rapport à un maillon de la chaîne. Un tel support glissant est communément appelé « tournette ». En partie inférieure, une tournette comprend un mandrin solidaire d'un pignon monté en engrènement avec une crémaillère montée fixe sur le bâti du convoyeur, de manière à appliquer un mouvement de rotation audit mandrin au sein de chaque tournette lors du déplacement de la chaîne le long du convoyeur.

Plus avant, un mandrin présente une forme tubulaire et comprend en partie supérieure un organe amovible, communément appelé « tête » ou « nez », conformé pour venir s'emmancher dans le col d'une préforme. Un tel nez est monté sur le mandrin au travers d'un emboîtement par baïonnettes diamétralement saillantes en parte basse dudit nez et destinées à coopérer au sein de rainures ménagées dans les parois internes du mandrin. En insertion, le nez doit est sécurisé en emboîtement par rotation, généralement selon un angle de 10° à 40°.Une fois emboîté, le nez est verrouillé sur le mandrin au travers d'une goupille.

Ainsi, une préforme emboîtée sur le nez est entraînée à la fois en translation et en rotation le long de son cheminement à l'intérieur du four.

Une problématique réside dans le fait qu'une même installation doit permettre de s'adapter à la production de différents formats de récipients, à partir de préformes pouvant avoir des dimensions différentes de leur col. Un nez de tournette étant dédié à un unique format de col de préforme, en cas de changement du format de production, il est alors nécessaire de remplacer chaque nez de tournette.

Pour ce faire, il est nécessaire d'immobiliser chaque mandrin, puis de venir appliquer une rotation à chaque nez de tournette pour libérer la goupille de verrouillage avant de l'extraire verticalement. Un autre format de nez est alors inséré sur chaque tournette, en déroulant inversement les mêmes étapes.

L'invention trouvera son application dans le remplacement de nez de tournettes d'un four d'une installation de soufflage de préformes, au sein d'une ligne industrielle de production de produits.

Cette opération de remplacement peut être réalisée manuellement et on comprend son caractère fastidieux, induisant une longue durée d'arrêt de toute la ligne de production et impactant d'autant son rendement.

C'est pour cette raison qu'il a été imaginé d'automatiser le remplacement des nez de tournette. Une solution connue est décrite dans le document EP 2 976 207 et fait intervenir un bras robotisé multi-axes, équipé à son extrémité distale d'un outil de pincement à même de saisir un nez de tournette sur un mandrin et de lui appliquer les mouvements nécessaires pour le désengager. Le nez extrait est déposé dans un magasin où l'outil saisit alors un autre format de nez pour venir le positionner au sein du mandrin préalablement libéré, jusqu'à verrouillage dudit autre nez sur ledit mandrin. Une problématique de cette solution robotisée réside dans le blocage du mandrin au cours de ces opérations de démontage et de montage de nez de tournette. De plus, le bras robotisé nécessite un volume utile libre de tout obstacle nécessaire à ses déplacements, souvent difficilement allouable dans l'environnement de la ligne de production aux abords du four.

Une autre solution peut consister en un chariot mobile remplaçant le bras robotisé, nécessitant moins de volume utile, mais perdant en précision.

En outre, les dispositifs existants permettent de remplacer simultanément plusieurs nez de tournettes adjacentes, généralement deux nez à la fois.

Dans un cas comme dans l'autre, une contrainte récurrente réside dans la nécessité d'aligner parfaitement l'outil avec un ou plusieurs nez de tournette en vue de les saisir et les désengager de leur mandrin, mais aussi au moment d'introduire les autre nez. Un tel alignement de l'outil s'effectue généralement selon une position indexée par rapport au défilement de la chaîne. Une telle indexation est extrêmement précise, notamment s'opérant au millimètre près, voire en deçà.

Un problème survient au fil du temps et du vieillissement des matériaux soumis aux contraintes mécaniques et thermiques à l'intérieur du four. On constate un allongement de la chaîne du convoyeur, en particulier une augmentation significative de la distance entre les maillons. De surcroît, cet allongement ne s'effectue pas régulièrement le long de la chaîne, certains maillons s'écartant davantage que d'autres.

Dès lors, il est nécessaire de redéfinir constamment l'indexation de la position de chaque outil en vue du remplacement de chaque nez de tournette par rapport à la position réelle de chaque maillon supportant un mandrin.

Une solution consiste à détecter la position réelle à chaque remplacement, au travers d'une mesure de distance réalisée par une mire ou un capteur optique. En fonction de la mesure, l'outil est repositionné automatiquement vers une nouvelle position indexée par l'intermédiaire d'un contrôleur opérant de façon numérique.

Toutefois, dans un environnement pourvu essentiellement de surfaces métalliques prévues résistantes au traitement thermique à l'intérieur du four, le recours à des systèmes de mesure et de détection optique engendre des risques d'erreurs, essentiellement dues aux réflexions sur les surfaces.

De surcroît, l'utilisation de moyens numériques pour indexer les positionnements de chaque outil génère une configuration et un traitement informatiques adaptés, souvent complexe à mettre en oeuvre et nécessitant un opérateur avec une qualification dédiée pour toute intervention visant la gestion de ces moyens numériques.

L'invention a pour but de pallier les inconvénients de l'état de la technique en proposant un dispositif de remplacement de nez de tournette d'un four d'une installation de soufflage de préformes, au sein d'une ligne industrielle de production et de traitement de produits. Un tel dispositif de remplacement prévoit une indexation de l'alignement de chacun de ses outils de façon mécanique, sans appliquer de contrainte sur la chaîne et les tournettes, que ce soit sur les mandrins ou sur les nez de tournettes lors de leur extraction et de leur insertion au moment de leur remplacement.

Pour ce faire, selon l'invention, le dispositif de remplacement comprend :
- au moins un outil de préhension d'au moins un nez de tournette, ledit outil étant entraîné en déplacement selon au moins une première direction, entre une position écartée et une position en alignement de ladite tournette ;
- au moins un moyen d'indexation de chaque outil par déplacement transversal par rapport à ladite première direction vers ladite position en alignement,
caractérisé par le fait que :
- au moins un moyen d'indexation comprend au moins un organe de réception par insertion de chaque outil selon la position en alignement.

De façon additionnelle mais non limitative, le dispositif de remplacement peut comprendre plusieurs outils de préhension montés sur un unique support et qu'il comprend un seul moyen d'indexation des outils par déplacement transversal par rapport audit support.

Ledit dispositif de remplacement peut comprendre un moyen d'indexation par outil, les outils étant montés mobiles les uns par rapport aux autres par rapport audit support. Chaque outil peut être libre en déplacement selon une direction transversale à ladite première direction.

Chaque moyen d'indexation peut être monté mobile entre une position escamotée vers une position de référencement, et inversement ; en position de référencement, chaque moyen d'indexation étant en position en alignement.

Chaque moyen d'indexation peut comprendre au moins un moyen de référencement conformé complémentairement à un mandrin de tournette, pour coopérer en accouplement avec ledit mandrin de tournette en position de référencement. Chaque moyen de référencement peut être aligné verticalement avec au moins un organe de réception.*

Chaque organe de réception de chaque moyen d'indexation peut comprendre au moins un logement ouvert du côté de chaque outil, chaque logement présentant au moins une paroi interne convergente depuis ladite ouverture vers l'intérieur dudit logement.

Chaque organe de réception peut se présenter sous la forme d'une fourche à deux branches.

L'invention concerne aussi un procédé de remplacement de nez de tournette d'un four d'une installation de soufflage de préformes au sein d'une ligne industrielle de production et de traitement de produits, dans lequel au moins :
- on amène au moins une tournette à un emplacement déterminé ;
- on déplace selon une première direction au moins un outil de préhension d'au moins un nez de tournette vers ledit emplacement déterminé depuis une position écartée vers une position en alignement de ladite tournette.

Un tel procédé de remplacement se caractérise en ce qu'il consiste à au moins :
- déplacer un moyen d'indexation vers une position de référencement et accoupler un moyen de référencement avec un mandrin de ladite au moins une tournette
- lors de son déplacement depuis vers la position en alignement, indexer par déplacement transversal à ladite première direction, au moins chaque outil de préhension par insertion au sein d'au moins dudit moyen d'indexation.

D'autres caractéristiques et avantages de l'invention ressortiront de la description détaillée qui va suivre des modes de réalisation non limitatifs de l'invention, en référence aux figures annexées dans lesquelles :
[Fig. 1] représente schématiquement une vue en perspective d'un mode de réalisation du dispositif de remplacement ;
[Fig. 2] représente schématiquement une vue de côté de la figure 1, montrant un outil de préhension en position écartée et le moyen d'indexation en position escamotée ;
[Fig. 3] représente schématiquement une vue de côté montrant le moyen d'indexation en position de référencement accouplé avec une tournette
[Fig. 4] représente schématiquement une vue de côté montrant le moyen d'indexation en position de référencement accouplé avec une tournette et l'outil de préhension en position en alignement ; et
[Fig. 5] représente une vue de dessus de la figure 1

La présente invention concerne la fabrication de produits de type récipients au sein d'une ligne industrielle de production et de traitement desdits produits.

De tels produits peuvent être des récipients, de type bouteille ou flacon, en matériau plastique. De tels produits sont généralement destinés à contenir des fluides ou des liquides, notamment agroalimentaires.

La fabrication de ces récipients en matériau plastique peut s'effectuer au cours d'une opération de mise en forme par soufflage « préformes », notamment obtenues à partir de paraisons. Ces préformes comprennent un corps cylindrique tubulaire de forme oblongue et fermé à une extrémité par un fond arrondi et prolongé à l'extrémité opposée ouverte munie d'un col. Sous ce col, une collerette annulaire saillante sert de surface d'appui à un moyen de préhension, comme une pince, ou à des rails de guidage. Chaque préforme s'apparente globalement à un tube à essai, surmonté du goulot du futur récipient qu'elle constituera après une opération de soufflage. L'invention vise plus particulièrement le remplacement de nez de tournette d'un four d'une installation de soufflage de préformes.

Comme évoqué précédemment, l'opération de soufflage du corps de la préforme nécessite qu'il soit porté à une température supérieure à la température de transition vitreuse du matériau plastique constituant la préforme. Préalablement au soufflage, on procède à un conditionnement thermique de chaque préforme en la faisant circuler à l'intérieur d'un four. La circulation des préformes dans ce four s'opère par un convoyeur 1 à chaîne 100, muni de moyens de préhension 101 réparti régulièrement le long de ladite chaîne 100. En particulier un moyen de préhension 101 est solidaire de chaque maillon de la chaîne 100 du convoyeur 1.

Plus avant, un moyen de préhension 101 n'est pas une simple pince venant maintenir une préforme par enserrement, mais doit permettre d'entraîner une préforme en rotation, afin de répartir le gradient de température sur l'intégralité du corps de chaque préforme lors de son passage dans le four.

Un moyen de préhension 101 comprend un support de réception d'une préforme, ledit support étant monté en pivot glissant par rapport à un maillon de la chaîne 100. Un tel support 102 glissant est communément appelé « tournette ». En partie inférieure, une tournette comprend un mandrin solidaire d'un pignon monté en engrènement avec une crémaillère montée fixe sur le bâti du four, de manière à appliquer un mouvement de rotation audit mandrin au sein de chaque tournette lors du déplacement de la chaîne 100 dans le four.

Plus avant, un mandrin présente une forme tubulaire et comprend en partie supérieure un organe amovible, communément appelé « tête » ou « nez », conformé pour venir saisir le col d'une préforme, notamment venir s'y emmancher. Un tel nez est monté sur le mandrin au travers d'un emboîtement par baïonnettes diamétralement saillantes en partie basse dudit nez et destinées à coopérer au sein de rainures ménagées dans les parois internes du mandrin. En insertion, le nez est sécurisé en emboîtement par rotation, généralement selon un angle de 10° à 20°.Une fois emboîté, le nez est verrouillé sur le mandrin au travers d'une goupille.

Ainsi, une préforme emboîtée sur le nez est entraînée à la fois en translation et en rotation le long de son cheminement à l'intérieur du four.

Dans ce contexte, l'invention concerne un dispositif 2 de remplacement de nez de tournette d'un four d'une installation de soufflage de préformes.

Un tel dispositif 2 de remplacement est configuré pour intervenir au niveau d'un four d'une installation de soufflage de préformes. Ledit dispositif 2 de remplacement est alors positionné à proximité directe dudit four, de façon indépendante et séparée, ou bien rapporté ou intégré à ladite installation soufflage.

En particulier, le dispositif 2 de remplacement peut être placé ou positionné d'un côté, mais de préférence de part et d'autre de ladite chaîne 100 du convoyeur 1 du four, transversalement par rapport à une direction longitudinale selon laquelle s'étend et se déplace ladite chaîne 100, de préférence orthogonalement ou sensiblement orthogonalement. Plus avant le dispositif 2 de remplacement est situé à une zone le long de laquelle la chaîne 100 du convoyeur 1 s'étend linéairement ou sensiblement linéairement. Le dispositif 2 de remplacement peut aussi venir sur une longueur de la chaîne 100 englobant plusieurs de ses maillons et tournettes.

Afin d'assurer le remplacement d'au moins un nez de tournette, le dispositif 2 de remplacement comprend au moins un outil 3 de préhension d'au moins un nez de tournette.

Selon un mode préférentielle de réalisation, le dispositif 2 de remplacement comprend plusieurs outils 3, montés sur un support 30 que présente ledit dispositif 2 de remplacement. Ce support 30 permet d'aligner les outils 3 qu'il supporte, notamment parallèlement à la direction longitudinale de la chaîne 100. Ainsi le déplacement du support 30 permet de rapprocher ou écarter plusieurs outils 3 simultanément par rapport à la chaîne 100.

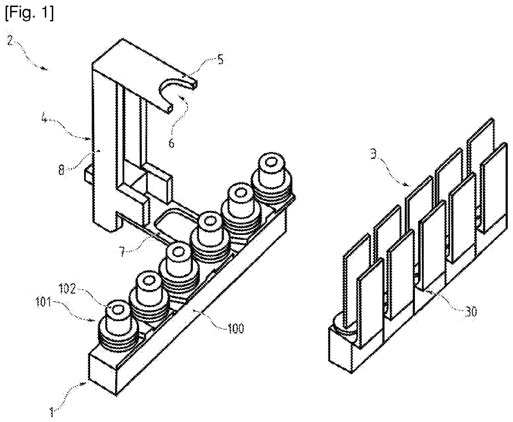

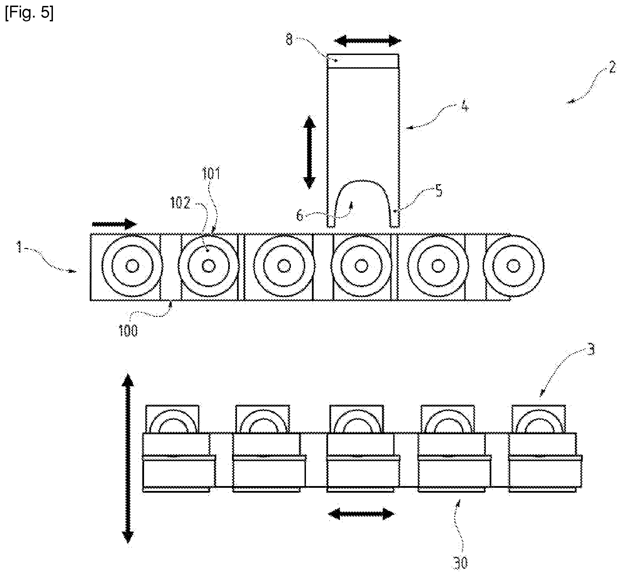

Les figures 1 et 5 montrent un mode de réalisation avec un dispositif 2 de remplacement dont le support 30 comprend cinq outils 3 Chaque outil 3 assure l'accrochage par l'intermédiaire de composants adaptés qu'il comprend, notamment par enserrement au moyen d'une pince ou par accrochage magnétique, permettent de saisir et maintenir un nez de tournette, en vue, d'une part, des déplacements hors de la tournette et, d'autre part, d'effectuer son emboîtement ou son extraction réciproquement vers ou depuis ladite tournette. Ce maintien permet notamment de venir prendre et déposer un nez de tournette au sein d'un magasin.

A ce titre, un tel magasin permet de stocker, de façon référencée ou ordonnée, notamment par format, différents nez de tournettes, en vue d'effectuer le remplacement par le dispositif 2 de remplacement. Un tel magasin peut être compris ou non dans le dispositif 2 de remplacement.

Dès lors, ledit au moins un outil 3 est entraîné en déplacement selon au moins une première direction, entre une position écartée et une position en alignement de ladite tournette. De préférence, tous les outils 3 montés sur le support 30 sont déplacés selon ladite première direction, entre ces positions extrêmes au travers de positions intermédiaires.

En particulier, au moins un outil 3 est déplacé en élévation, pour venir se positionner au-dessus de la chaîne 100 en position d'alignement. L'alignement s'effectue alors verticalement ou sensiblement verticalement, un outil 3 se trouvant selon un axe vertical de sorte qu'il assure, par descente et remontée, l'insertion ou l'extraction d'un nez de tournette.

Préférentiellement, ladite première direction s'étend transversalement, notamment orthogonalement ou sensiblement orthogonalement, par rapport à la direction longitudinale de ladite chaîne 100. Chaque outil 3 est donc déplacé en se rapprochant ou s'écartant de la chaîne 100.

Afin de compenser les différences d'écartement entre les maillons et les tournettes, l'invention prévoit de pourvoir le dispositif 2 de remplacement d'un composant assurant le parfait alignement de chaque outil 3 avec la tournette sur laquelle il doit intervenir, à savoir son insertion ou son extraction réciproquement vers ou depuis une tournette. Ainsi, le dispositif 2 de remplacement comprend un moyen d'indexation 4 de chaque outil 3 par déplacement transversal par rapport à ladite première direction vers ladite position en alignement. Le moyen d'indexation 4 permet donc de déplacer chaque outil 3 longitudinalement ou parallèlement par rapport au support 30 et donc à la chaîne 100. Ce déplacement transversal à la première direction permet donc d'adapter le positionnement exact de chaque outil 3 par rapport à la tournette qui se situe en dessous, lorsqu'il est aligné au-dessus.

Un tel moyen d'indexation 4 est prévu extérieur à chaque outil 3. Il s'agit donc d'un autre composant du dispositif 2 de remplacement.

Selon le mode de réalisation représenté sur les figures, le moyen d'indexation 4 est positionné de l'autre côté de la chaîne 100 par rapport à l'outil 3 et son support 30. De ce fait, le moyen d'indexation 4 est indépendant par rapport à l'outil 3.

Dans le cas de plusieurs outils 3 montés sur un unique support 30, le dispositif 2 de remplacement peut alors comprendre un seul moyen d'indexation des outils 3 par déplacement transversal par rapport audit support 30. En somme, un seul moyen d'indexation 3 permet d'assurer l'alignement de plusieurs outils 3 à la fois, surtout dans le cas d'outils solidaires et fixes par rapport à leur support 30.

Selon une autre configuration, un moyen d'indexation peut être alloué à chaque outil 3, qui peut alors se déplacer par rapport audit support 30 et aux autres outils 3 qu'il supporte.

Le dispositif 2 de remplacement peut comprendre un moyen d'indexation 4 par outil 3, les outils 3 étant montés mobiles les uns par rapport aux autres par rapport audit support 30.

De préférence, chaque outil 3 peut être libre en déplacement selon une direction transversale à ladite première direction. En somme, un tel mouvement des outils 3 par rapport à leur support s'effectue parallèlement à la direction longitudinale de la chaîne 100.

Plus avant, un tel alignement est prévu mécanique et l'invention prévoit d'équiper le dispositif 2 de remplacement d'un composant servant d'interface pour permettre et assurer un alignement amélioré de chaque outil 3 avec la tournette sur laquelle il doit opérer. Pour ce faire, ledit au moins un moyen d'indexation 4 comprend au moins un organe 5 de réception par insertion de chaque outil 3 selon la position en alignement. Selon un mode de réalisation, chaque organe 5 de réception de chaque moyen d'indexation 4 comprend au moins un logement 6 ouvert du côté de chaque outil 3. Ainsi une partie de l'outil 3 peut venir s'insérer au sein du logement 6 correspondant, situé en vis-à-vis.

Afin d'améliorer l'alignement, chaque logement 6 peut présenter au moins une paroi interne convergente depuis ladite ouverture vers l'intérieur dudit logement 6. De préférence, les deux parois latérales et opposées sont inclinées de manière à guider l'outil lors de son insertion. Dès lors, la pente de chaque paroi du logement 6 s'étend globalement selon un angle par rapport à un plan vertical parallèle à la première direction.

Selon le mode préférentiel de réalisation, comme visible sur les figures 1 et 5, chaque organe 6 de réception peut se présenter sous la forme d'une fourche à deux branches. L'espace entre les branches de la fourche d'un organe 6 forme le logement configuré pour, d'une part, recevoir en insertion une partie d'un outil 3 et, d'autre part, le guider transversalement.

En outre, le guidage transversal d'un seul outil 3 permet au travers de son insertion au sein d'un seul logement 6 d'un unique organe 5, d'aligner tous les autres outils 3 du support 30, s'ils sont solidaires, comme représenté sur la figure 5.

Selon un autre mode de réalisation, non représenté, le dispositif 2 de remplacement comprend plusieurs organes 5, permettant de recevoir chacun un outil 3. Les outils 3 sont alors mobiles par rapport à leur support 30, venant s'ajuster transversalement lors de leur insertion au sein de leur logement correspondant.

Dans une telle configuration, l'alignement d'un ou plusieurs outils 3 est effectué par les moyens d'indexation 4. Avantageusement, chaque moyen d'indexation 4 est monté mobile entre une position escamotée vers une position de référencement, et inversement. En d'autres termes, le moyen d'indexation 4 vient se positionner en alignement avec une ou plusieurs tournettes et peut recevoir un ou plusieurs outils 3, qui alors se retrouve de fait aligné. En effet, en position de référencement, chaque moyen d'indexation 4 est amené vers la position en alignement.

Afin d'améliorer l'alignement, chaque moyen d'indexation 4 peut comprendre au moins un moyen de référencement 7 conformé complémentairement à un mandrin de tournette. En somme, le moyen de référencement 7 est configuré, notamment conformé et dimensionné, pour coopérer en accouplement avec ledit mandrin de tournette en position de référencement.

Selon le mode de réalisation représenté sur les figures, le dispositif 2 de remplacement comprend un seul moyen d'indexation 4 avec un seul organe 6 et un seul moyen de référencement 7 correspondant.

Selon d'autres modes de réalisation, un moyen d'indexation 4 peut comprendre un seul moyen de référencement 7 pour plusieurs organes 6.

Selon encore un autre mode de réalisation, un moyen d'indexation 4 peut comprendre plusieurs moyens de référencement 7 pour plusieurs organes 6, chaque moyens de référencement 7 étant dédié et solidarisé à un organe 6.

Selon le mode préférentiel de réalisation, comme visible sur les figures 1 et 5, ledit moyen de référencement 7 peut être conformé en fourche, avec deux branches. L'espace entre les branches de la fourche des moyens de référencement forme un intervalle configuré complémentairement pour au moins recevoir en emboîtement ledit mandrin de tournette. En particulier, chaque moyen de référencement 7 est mobile et vient englober ledit mandrin lors de son déplacement vers la position de référencement correspondant à la position en alignement.

A ce titre, préférentiellement, chaque moyen de référencement 7 est aligné verticalement avec au moins un organe 6 de réception. En d'autres termes, un châssis 8 relie de façon solidaire, en bas un ou plusieurs moyens de référencement 7 avec en haut un ou plusieurs organes 6 de réception. Un tel châssis 8 fait partie des moyens d'indexation 4. Dès lors, le déplacement du ou des moyens de référencement 7 induit le déplacement du ou des organes 6, et inversement. Ce déplacement s'effectue donc transversalement, en rapprochement jusqu'à la position de référencement en alignement, vers une position ou le moyen d'indexation 4 est escamoté, hors du champ de manoeuvre de la chaîne 100.

Ainsi, le dispositif 2 de remplacement assure un alignement parfait d'un ou plusieurs outils 3, en venant positionner le ou les moyens de référencement 7 avec un mandrin de tournette, déplaçant de concert le ou les organes 6 qui vont recevoir le ou les outils 3 correspondants.

A ce titre, l'invention concerne aussi un procédé de remplacement de nez de tournette d'un four d'une installation de soufflage de préformes au sein d'une ligne industrielle de production et de traitement de produits.

Un tel procédé comprend au moins les étapes suivantes, à savoir qu'on amène au moins une tournette à un emplacement déterminé. On déplace donc la chaîne 100 afin de positionner une tournette à un endroit spécifique, notamment un endroit dans la zone d'intervention du dispositif 2 de remplacement.

Ensuite, on déplace selon une première direction, à savoir transversalement, au moins un outil 3 de préhension d'au moins un nez de tournette vers ledit emplacement déterminé depuis une position écartée vers une position en alignement de ladite tournette.

Comme évoqué précédemment, l'outil 3 peut venir du magasin chargé d'un nez de tournette qu'il vient de prendre,en vue de le positionner dans ladite tournette à vide. L'outil 3 peut aussi être à vide en vue de venir retirer le nez enclenché dans ladite tournette.

Avantageusement, on déplace un moyen d'indexation 4 vers une position de référencement et on accouple un moyen de référencement 7 avec un mandrin de ladite au moins une tournette.

Comme évoqué précédemment, plusieurs moyens de référencement 7 peuvent venir se déplacer jusqu'à coopérer avec plusieurs mandrins de plusieurs tournettes. Ces dernières se trouvent alors adjacentes les unes aux autres le long de ladite chaîne 100.

De plus, lors de son déplacement vers la position en alignement, on indexe par déplacement transversal à ladite première direction, au moins chaque outil 3 de préhension par insertion au sein d'au moins dudit moyen d'indexation 4, notamment par coopération en insertion au sein d'un logement 6 dont chaque moyen d'indexation 4 est pourvu.

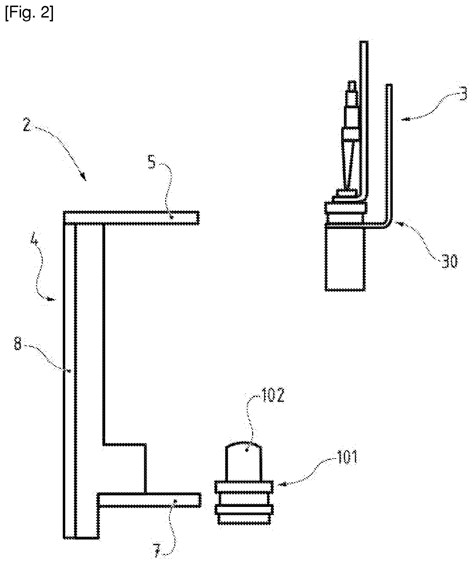

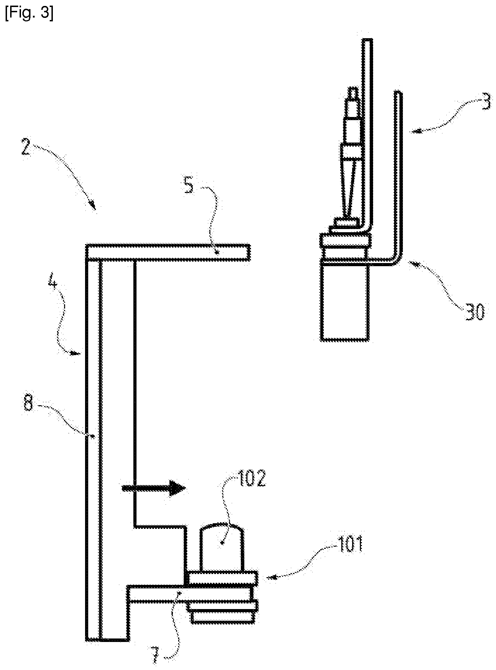

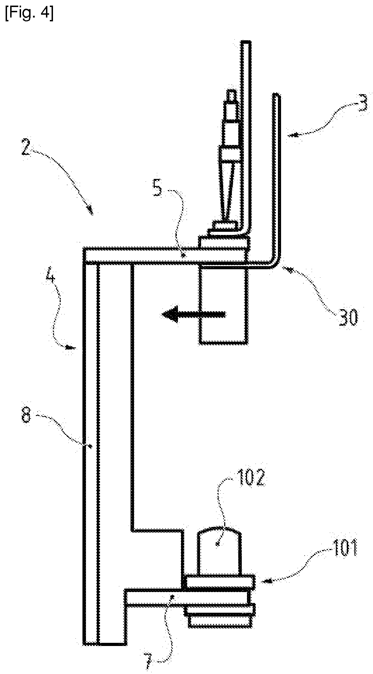

Les figures 2 à 4 montrent successivement un exemple de plusieurs étapes du procédé vers l'accouplement des moyens d'indexation 4 avec un mandrin de tournette et l'alignement d'un outil par insertion au sein d'un logement 6 d'un organe 5. En particulier, la figure 2 montre les moyens d'indexation 4 en position escamotée et l'outil 3 au cours de sa trajectoire, par exemple en revenant du magasin. La figure 3 montre le déplacement du moyen d'indexation 4 vers la chaîne 100 et l'accouplement de sa fourche avec le mandrin de tournette. Ensuite, la figure 4 montre un déplacement de l'outil 3 qui vient s'emboîter au sein de son logement 6 correspondant, se centrant par rapport à la tournette située en dessous. L'outil 3 se retrouve alors parfaitement aligné, du fait de la coopération du moyens de référence 7 en bas avec le mandrin et, dans le cas d'un organe 5 pourvu d'un logement en fourche avec des parois convergentes, de se retrouver parfaitement au droit, aligné verticalement, avec ladite tournette.

En sens inverse, on délivre l'outil 3 et le moyen d'indexation 4, permettant de déplacer la chaîne 100 jusqu'à positionner la ou les tournettes suivantes le long de la chaîne 100, en vue d'intervenir dessus. Pendant ce laps de temps, le ou les outils 3 peuvent revenir au magasin afin de déposer et/ou prélever des nez, puis revenir en vue de réitérer l'opération.

A ce titre, de façon évidente, l'intervention nécessite d'abord le référencement puis l'indexation du ou des outils 3, puis la prise de nez d'une ou plusieurs tournettes, pour venir les déposer dans le magasin, en prendre d'autres pour revenir les positionner, avant de libérer la chaîne 100, puis répéter l'opération sur d'autres tournettes.

Ainsi, en ajoutant un moyen mécanique externe d'indexation 4, l'invention permet d'assurer un alignement parfait d'un ou plusieurs outils 3, en vue d'opérer une intervention sur une tournette, de préférence de plusieurs tournettes à la fois, pour remplacer leurs nez. L'invention permet d'automatiser l'intervention, de façon simple et efficace, coordonnant les déplacements des différents éléments, comme les moyens d'indexation 4 et les outils 3, ainsi que le pas d'avancement de la chaîne 100.

## Revendications

1. Dispositif (2) de remplacement de nez de tournette d'un four d'une installation de soufflage de préformes pour une ligne industrielle de production et de traitement de produits, comprenant :
- au moins un outil (3) de préhension d'au moins un nez de tournette, ledit outil (3) étant entraîné en déplacement selon au moins une première direction, entre une position écartée de l'outil (3) de préhension et une position de l'outil (3) de préhension en alignement de ladite tournette ;
- au moins un moyen d'indexation (4) de chaque outil (3) de préhension par déplacement transversal du au moins un moyen d'indexation (4) par rapport à ladite première direction vers ladite position en alignement,
**caractérisé par le fait que** :
- au moins un moyen d'indexation (4) comprend au moins un organe (5) de réception par insertion de chaque outil (3) selon la position en alignement.

2. Dispositif (2) de remplacement selon la revendication 1, **caractérisé par le fait qu'**il comprend plusieurs outils (3) de préhension montés sur un unique support (30) et qu'il comprend un seul moyen d'indexation (4) des outils (3) par déplacement transversal par rapport audit support (30).

3. Dispositif (2) de remplacement selon la revendication 2, **caractérisé par le fait qu'**il comprend un moyen d'indexation (4) par outil, les outils (3) étant montés mobiles les uns par rapport aux autres par rapport audit support (30).

4. Dispositif (2) de remplacement selon l'une quelconque des revendications précédentes, **caractérisé par le fait que** chaque outil (3) est libre en déplacement selon une direction transversale à ladite première direction.

5. Dispositif (2) de remplacement selon l'une quelconque des revendications précédentes, **caractérisé par le fait que**
- chaque moyen d'indexation (4) est monté mobile entre une position escamotée vers une position de référencement, et inversement ;
- en position de référencement, chaque moyen d'indexation (4) étant en position en alignement.

6. Dispositif (2) de remplacement selon la revendication précédente, **caractérisé par le fait que** chaque moyen d'indexation (4) comprend au moins un moyen de référencement (7) conformé complémentairement à un mandrin de tournette, pour coopérer en accouplement avec ledit mandrin de tournette en position de référencement.

7. Dispositif (2) de remplacement selon la revendication précédente, **caractérisé par le fait que** chaque moyen de référencement (7) est aligné verticalement avec au moins un organe (5) de réception.

8. Dispositif (2) de remplacement selon l'une quelconque des revendications précédentes, **caractérisé par le fait que** chaque organe (5) de réception de chaque moyen d'indexation (4) comprend au moins un logement (6) ouvert du côté de chaque outil (3), chaque logement (6) présentant au moins une paroi interne convergente depuis ladite ouverture vers l'intérieur dudit logement (6).

9. Dispositif (2) de remplacement selon l'une quelconque des revendications précédentes, **caractérisé par le fait que** chaque organe (5) de réception se présente sous la forme d'une fourche à deux branches.

10. Procédé de remplacement de nez de tournette d'un four d'une installation de soufflage de préformes au sein d'une ligne industrielle de production et de traitement de produits, dans lequel au moins :
- on amène au moins une tournette à un emplacement déterminé ;
- on déplace selon une première direction au moins un outil (3) de préhension d'au moins un nez de tournette vers ledit emplacement déterminé depuis une position écartée vers une position en alignement de ladite tournette ;
**caractérisé en ce qu'**il consiste à au moins :
- déplacer un moyen d'indexation (4) vers une position de référencement et accoupler un moyen de référencement (7) avec un mandrin de ladite au moins une tournette
- lors de son déplacement vers la position en alignement, indexer par déplacement transversal à ladite première direction, au moins chaque outil (3) de préhension par insertion au sein d'au moins dudit moyen d'indexation (4).

## Patentansprüche

1. Vorrichtung (2) zum Auswechseln von Spindelnasen eines Ofens einer Anlage zum Blasen von Vorformlingen für eine industrielle Linie zur Fertigung und Bearbeitung von Produkten, umfassend:
- mindestens ein Werkzeug (3) zum Greifen mindestens einer Spindelnase, wobei das Werkzeug (3) in mindestens einer ersten Richtung zwischen einer beabstandeten Position des Greifwerkzeugs (3) und einer mit der Spindel ausgerichteten Position des Greifwerkzeugs (3) bewegt wird;
- mindestens ein Mittel (4) zur Indexierung jedes Greifwerkzeugs (3) durch Querbewegung des mindestens einen Indexierungsmittels (4) in Bezug auf die erste Richtung in die ausgerichtete Position,
**dadurch gekennzeichnet, dass**:
- mindestens ein Indexierungsmittel (4) mindestens ein Organ (5) zur Aufnahme durch Einsetzen jedes Werkzeugs (3) in der ausgerichteten Position umfasst.

2. Auswechselvorrichtung (2) nach Anspruch 1, **dadurch gekennzeichnet, dass** sie mehrere Greifwerkzeuge (3) umfasst, die an einem einzigen Träger (30) montiert sind, und dass sie ein einziges Mittel (4) zur Indexierung der Werkzeuge (3) durch Querbewegung in Bezug auf den Träger (30) umfasst.

3. Auswechselvorrichtung (2) nach Anspruch 2, **dadurch gekennzeichnet, dass** sie ein Indexierungsmittel (4) pro Werkzeug umfasst, wobei die Werkzeuge (3) relativ zueinander beweglich in Bezug auf den Träger (30) montiert sind.

4. Auswechselvorrichtung (2) nach einem der vorangehenden Ansprüche, **dadurch gekennzeichnet, dass** jedes Werkzeug (3) in einer zur ersten Richtung quer verlaufenden Richtung frei beweglich ist.

5. Auswechselvorrichtung (2) nach einem der vorangehenden Ansprüche, **dadurch gekennzeichnet, dass**
- jedes Indexierungsmittel (4) beweglich zwischen einer eingefahrenen Position und einer Referenzierungsposition und umgekehrt montiert ist;
- sich in der Referenzierungsposition jedes Indexierungsmittel (4) in der ausgerichteten Position befindet.

6. Auswechselvorrichtung (2) nach dem vorangehenden Anspruch, **dadurch gekennzeichnet, dass** jedes Indexierungsmittel (4) mindestens ein Referenzierungsmittel (7) umfasst, das komplementär zu einem Spindeldorn geformt ist, um in der Referenzierungsposition kuppelnd mit dem Spindeldorn zusammenzuwirken.

7. Auswechselvorrichtung (2) nach dem vorangehenden Anspruch, **dadurch gekennzeichnet, dass** jedes Referenzierungsmittel (7) vertikal mit mindestens einem Aufnahmeorgan (5) ausgerichtet ist.

8. Auswechselvorrichtung (2) nach einem der vorangehenden Ansprüche, **dadurch gekennzeichnet, dass** jedes Aufnahmeorgan (5) jedes Indexierungsmittels (4) mindestens eine Aufnahme (6) umfasst, die auf der Seite jedes Werkzeugs (3) offen ist, wobei jede Aufnahme (6) mindestens eine Innenwand aufweist, die von der Öffnung zum Inneren der Aufnahme (6) konvergiert.

9. Auswechselvorrichtung (2) nach einem der vorangehenden Ansprüche, **dadurch gekennzeichnet, dass** jedes Aufnahmeorgan (5) die Form einer Gabel mit zwei Zinken aufweist.

10. Verfahren zum Auswechseln von Spindelnasen eines Ofens einer Anlage zum Blasen von Vorformlingen innerhalb einer industriellen Linie zur Fertigung und Bearbeitung von Produkten, wobei zumindest:
- mindestens eine Spindel an eine bestimmte Stelle bewegt wird;
- mindestens ein Greifwerkzeug (3) mindestens einer Spindelnase in einer ersten Richtung zu der bestimmten Stelle aus einer beabstandeten Position in eine mit der Spindel ausgerichtete Position bewegt wird;
**dadurch gekennzeichnet, dass** es zumindest darin besteht:
- ein Indexierungsmittel (4) in eine Referenzierungsposition zu bewegen, ein Referenzierungsmittel (7) mit einem Dorn der mindestens einen Spindel während seiner Bewegung in die ausgerichtete Position zu koppeln und durch Bewegung quer zur ersten Richtung zumindest jedes Greifwerkzeug (3) durch Einsetzen zumindest in das Indexierungsmittel (4) zu indexieren.

## Claims

1. Device (2) for replacing a spinner tip of an oven of a preform blow-moulding installation for an industrial line for producing and treating products, comprising:
- at least one tool (3) for gripping at least one spinner tip, said tool (3) being driven in movement in at least a first direction, between a moved-away position of the gripping tool (3) and a position of the gripping tool (3) in alignment with said spinner;
- at least one means (4) for indexing each gripping tool (3) by transverse movement of the at least one indexing means (4) with respect to said first direction towards said position in alignment,
**characterized in that**:
- at least one indexing means (4) comprises at least one member (5) for receiving by insertion each tool (3) in the position in alignment.

2. Replacing device (2) according to Claim 1, **characterized in that** it comprises a plurality of gripping tools (3) mounted on a single support (30), and **in that** it comprises a single means (4) for indexing the tools (3) by transverse movement with respect to said support (30).

3. Replacing device (2) according to Claim 2, **characterized in that** it comprises one indexing means (4) per tool, the tools (3) being mounted so as to be movable relative to one another with respect to said support (30) .

4. Replacing device (2) according to any one of the preceding claims, **characterized in that** each tool (3) is free to move in a direction transverse to said first direction.

5. Replacing device (2) according to any one of the preceding claims, **characterized in that**
- each indexing means (4) is mounted so as to be movable between a retracted position and a referencing position, and vice versa;
- in the referencing position, each indexing means (4) being in a position in alignment.

6. Replacing device (2) according to the preceding claim, **characterized in that** each indexing means (4) comprises at least one referencing means (7) shaped in a complementary manner to a spinner mandrel, in order to cooperate by coupling with said spinner mandrel in the referencing position.

7. Replacing device (2) according to the preceding claim, **characterized in that** each referencing means (7) is vertically aligned with at least one receiving member (5) .

8. Replacing device (2) according to any one of the preceding claims, **characterized in that** each receiving member (5) of each indexing means (4) comprises at least one recess (6) which is open on the side of each tool (3), each recess (6) having at least one inner wall converging from said opening towards the interior of said recess (6).

9. Replacing device (2) according to any one of the preceding claims, **characterized in that** each receiving member (5) is in the form of a fork with two branches.

10. Method for replacing a spinner tip of an oven of a preform blow-moulding installation within an industrial line for producing and treating products, in which at least:
- at least one spinner is provided at a determined location;
- at least one tool (3) for gripping at least one spinner tip is moved in a first direction towards said determined position from a moved-away position to a position in alignment with said spinner;
**characterized in that** it consists in at least:
- moving an indexing means (4) towards a referencing position and coupling a referencing means (7) with a mandrel of said at least one spinner;
- during its movement towards the position in alignment, indexing by movement transverse to said first direction at least each gripping tool (3) by insertion within at least one of said indexing means (4).
